# EUROPEAN PATENT SPECIFICATION

(11) **EP 4 166 356 B1**
(45) Date of publication and mention of the grant of the patent: **01.01.2025**
(21) Application number: 22196942.1
(22) Date of filing: 21.09.2022
(51) Int. Cl.: B60C 11/13, B60C 11/03, B60C 11/12

(54) **TIRE**
REIFEN
PNEUMATIQUE

(30) Priority: 18.10.2021 JP 2021170444
(43) Date of publication of application: 19.04.2023
(73) Proprietor: Sumitomo Rubber Industries, Ltd., Kobe-shi, Hyogo 651-0072 (JP)
(72) Inventor: MIURA, Akiko, Kobe-shi, Hyogo, 651-0072 (JP)
(74) Representative: Manitz Finsterwald Patent- und Rechtsanwaltspartnerschaft mbB

(56) References cited:
- EP-A2- 2 465 706
- EP-A2- 2 591 923
- EP-A2- 2 610 081
- JP-A- 2011 084 254
- JP-A- 2018 090 230

## Description

### Background of the Invention

### Field of the Invention

The present invention relates to a tire.

### Background art

The following Patent Document 1 discloses a pneumatic tire in which shoulder blocks are provided with shoulder longitudinal sub-grooves extending in the tire circumferential direction. The shoulder longitudinal sub-grooves reduce lateral rigidity in the tire axial direction of the shoulder blocks. Patent Document 1: Japanese Patent Application Publication No. 2015-137015
**Related technologies are also known from** EP 2 591 923 A2**,** EP 2 465 706 A2**,** EP 2 610 081 A2**,** JP 2011 084254 A**, and** JP 2018 090230 A**.**

### Summary of the Invention

### Problems to be solved by the Invention

when blocks in the tread portion are reduced in rigidity, the amount of deformation of the blocks during running becomes large. For this reason, wear energy acting on the blocks is increased, and consequently, there is a tendency that the wear resistance of the blocks is reduced.

The present invention was made in view of the above circumstances, and
a primary object of the present invention is to provide a tire capable of exhibiting excellent ride comfort performance while maintaining wear resistance of blocks.

### Means for solving the Problems

The present invention is set out in the appended claims. A tire comprises
a tread portion having a first tread edge, and provided with a shoulder circumferential groove disposed adjacently to the first tread edge and extending continuously in the tire circumferential direction, so as to define a shoulder land portion between the shoulder circumferential groove and the first tread edge,
   wherein
the shoulder land portion is provided with shoulder lateral grooves extending from the shoulder circumferential groove to the first tread edge, so as to circumferentially divide the shoulder land portion into shoulder blocks,
each of the shoulder blocks is provided with one or more shoulder sipes each extending from one of the shoulder lateral grooves and ending within the shoulder block, and
the shoulder lateral grooves include a tie-bar-equipped shoulder lateral groove provided with at least one tie bar rising from the groove bottom so as to connect between two of the shoulder blocks adjacent to the tie-bar-equipped shoulder lateral groove.

### Effects of the Invention

In the present invention, therefore, the tire can exhibit excellent ride comfort performance, while maintaining wear resistance of the block.

### Brief description of the Drawings

FIG. 1 is a developed partial view of the tread portion of a tire as an embodiment of the present invention.
FIG. 2 is an enlarged view showing a shoulder land portion and a middle land portion shown in FIG. 1.
FIG.3 is an enlarged view showing shoulder blocks and shoulder lateral grooves shown in FIG. 2.
FIG. 4 is a cross-sectional view taken along line A-A of FIG. 2.
FIG. 5 is a cross-sectional view taken along line B-B of FIG. 2.
FIG. 6 is an enlarged view showing a crown land portion shown in FIG. 1.
FIG. 7 is a developed partial view of the tread portion of a tire as a comparative example.

### Detailed description of the Invention

The present invention is suitably applied to pneumatic tires for passenger cars, but the present invention may be applied to pneumatic tires for heavy duty vehicles such as trucks and buses, as well as non-pneumatic tires so called airless tire.

Taking a pneumatic tire for a passenger car as an example, an embodiment of the present invention will be described in detail in conjunction with accompanying drawings.

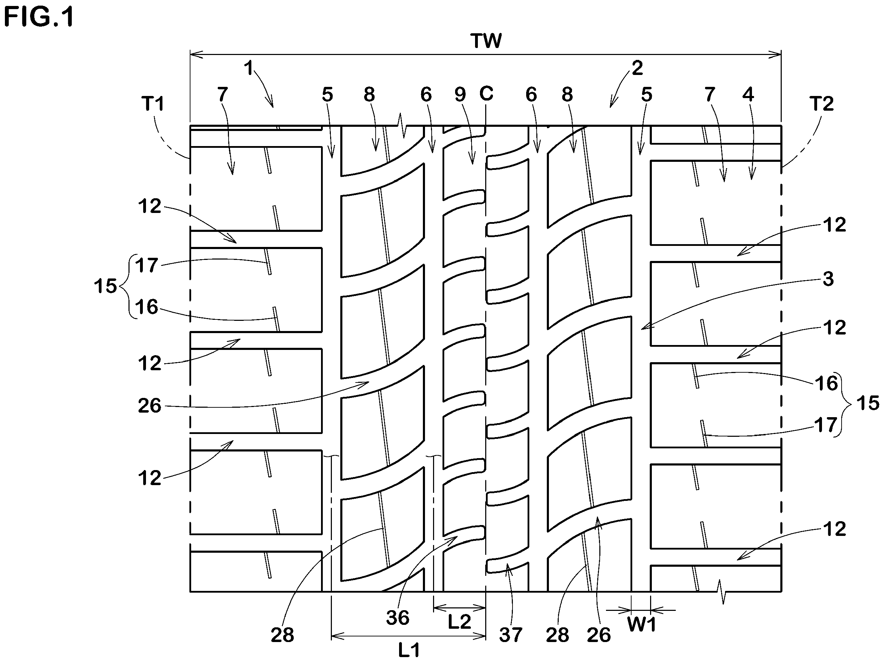

FIG. 1 is a developed partial view of the tread portion 2 of a tire 1 as an embodiment of the present invention.

The tire 1 comprises a tread portion 2 having a first tread edge T1 and a second tread edge T2.

The tread portion 2 is provided with circumferential grooves 3 disposed between the first tread edge T1 and the second tread edge T2 and extending continuously in the tire circumferential direction.

The tread portion 2 comprises land portions 4 axially divided by the circumferential grooves 3.

In the present embodiment, the tread portion 2 is provided with four circumferential grooves 3, and thereby, divided into five land portions 4 as shown in FIG. 1.

The present invention is however, not limited to such tread pattern. For example, the tread portion 2 may be divided into four land portions 4 by three circumferential grooves 3.

In the present embodiment, the tire 1 is bidirectional, and not specified which side should be outboard when the tire is attached to a vehicle.

For convenience, in each of the figures herein, the first tread edge T1 is shown as the tread edge on the left side of the tire equator C, and the second tread edge T2 is shown as the tread edge on the right side of the tire equator C.

It is preferable that a half of the tread portion 2 between the first tread edge T1 and the tire equator C has substantially the same configuration as a half of the tread portion 2 between the second tread edge T2 and the tire equator C.

It is preferable that the tread portion 2 has a pointsymmetrical tread pattern.

The first tread edge T1 and the second tread edge T2 correspond to the axially outermost edges of the ground contacting patch of the tire 1 when the tire 1 under its normal state is loaded by a normal load and the tread portion 2 is contacted with a flat horizontal surface at a camber angle of 0 degrees.

In the case of a pneumatic tire for which various standards have been established, the "normal state" means a state of the tire which is mounted on a normal rim and inflated to a normal pressure, but loaded with no tire load.

In the case of tires for which no standard is established such as airless tires, the "normal state" means a standard usage state according to the purpose of use of the tire, which is not mounted on the vehicle and loaded with no load.

In the present invention, unless otherwise noted, dimensions, positions and the like of the tire refer to those under the normal state.

The normal rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.

The normal pressure is the air pressure officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.

In the case of a pneumatic tire for which various standards have been established, the "normal load" is a load specified for the tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

In the case of tires for which no standard is established, the "normal load" refers to the maximum load applicable to the tire.

In the present embodiment, the circumferential grooves 3 are two shoulder circumferential grooves 5 and two crown circumferential grooves 6.

The two shoulder circumferential grooves 5 are disposed adjacently to the first tread edge T1 and second tread edge T2, respectively.

The two crown circumferential grooves 6 are disposed between the shoulder circumferential grooves 5, and one on each side of the tire equator.

The distance L1 in the tire axial direction from the tire equator C to the groove center line of each of the shoulder circumferential grooves 5 is preferably set in a range from 20% to 30% of the tread width TW.

The distance L2 in the tire axial direction from the tire equator C to the groove center line of each of the crown circumferential grooves 6 is preferably set in a range from 5% to 15% of the tread width TW.

The tread width TW is the distance in the tire axial direction between the first tread edge T1 and the second tread edge T2 in the normal state.

In the present embodiment, each of the circumferential grooves 3 is a straight groove extending in parallel with the tire circumferential direction. However, all the circumferential grooves 3 or some of them may be non-straight grooves, for example, zigzag or wavy grooves.

It is preferable that the groove width W1 of each of the circumferential grooves 3 is at least 3 mm.

Further, it is preferable that the groove width W1 of each of the circumferential grooves 3 is set in a range from 3.0% to 5.0% of the tread width TW.

The land portions 4 include two shoulder land portions 7. The two shoulder land portions 7 include the first tread edge T1 and the second tread edge T2, respectively, and are defined on the axially outside of the respective shoulder circumferential grooves 5.

The two shoulder land portions 7 have substantially the same configuration.

The land portions 4 further include two middle land portions 8 and one crown land portion 9.

The two middle land portions 8 are positioned adjacently to the respective shoulder land portions 7 via the shoulder circumferential grooves 5.

The two middle land portions 8 are respectively defined between the crown circumferential groove 6 and the respective shoulder circumferential grooves 5.

The two middle land portions 8 have substantially the same configuration.

The crown land portion 9 is defined between the two crown circumferential grooves 6 and positioned on the tire equator C.

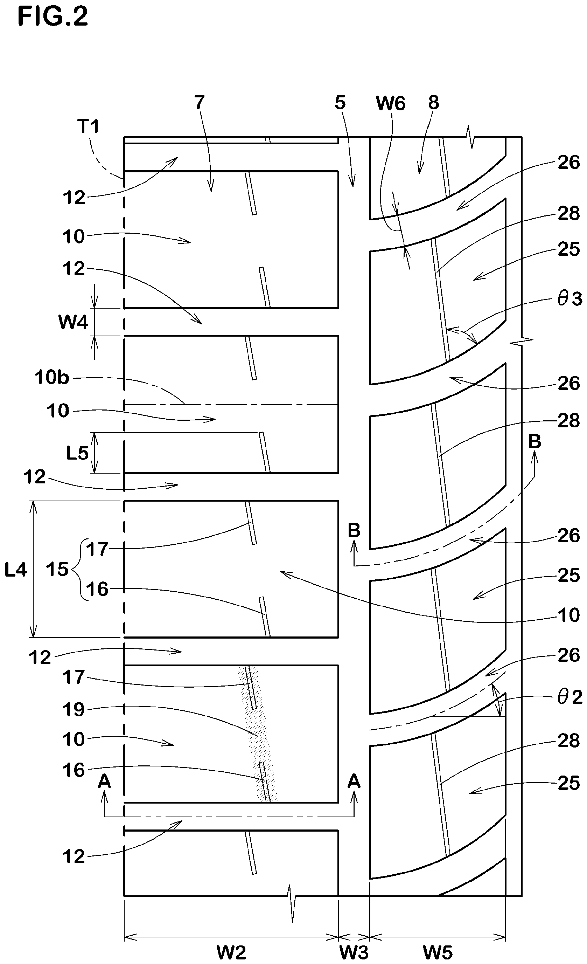

FIG. 2 shows the shoulder land portion 7 and the middle land portion 8 which are disposed on the first tread edge T1 side of the tire equator C.

As shown in FIG. 2, the shoulder land portion 7 is provided with lateral grooves 12 extending from the shoulder circumferential groove 5 to the first tread edge T1. Thereby, the shoulder land portion 7 is circumferentially divided into shoulder blocks 10 by the shoulder lateral grooves 12.

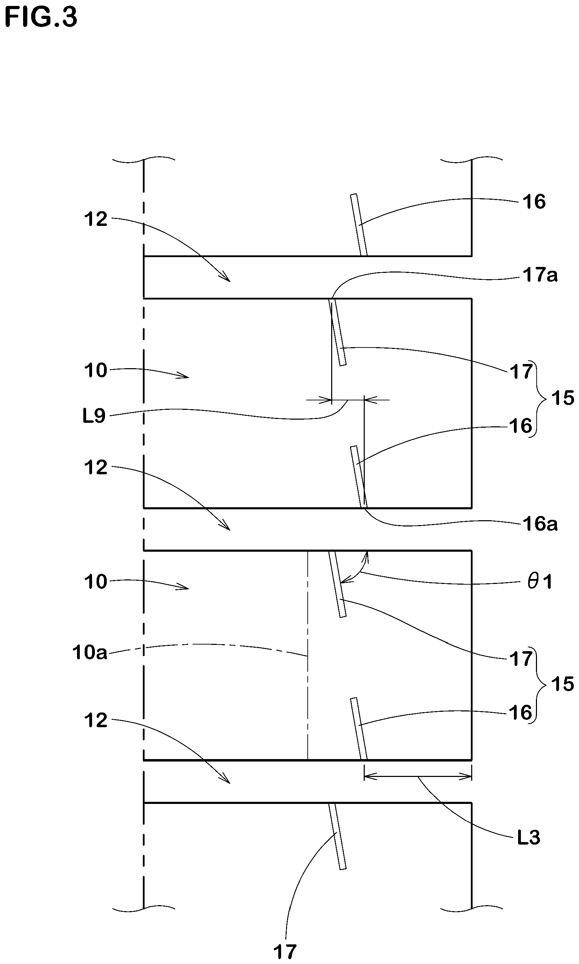

FIG. 3 shows three of the shoulder lateral grooves 12 and two of the shoulder blocks 10.

As shown, each of the shoulder blocks 10 is provided with at least one shoulder sipe 15.

Each shoulder sipe 15 extends from one of the shoulder lateral grooves 12 and ends within the shoulder block 10.

The term "sipe" means an incision having a small width and having two opposite side walls, the two opposite side walls extend substantially parallel to each other, and the width w2 between the two opposite side walls is 2.0 mm or less.

Further, the expression "substantially parallel" means that the angle between the two opposite side walls is 10 degrees or less. Preferably, the width w2 of the sipe is 0.5 to 1.5 mm, more preferably 0.5 to 1.0 mm.

In the present embodiment, the width w2 of the sipe is constant from the opening to the bottom thereof.

However, the present invention is not limited to such constant width. For example, the width of the sipe may be increased near the open top of the sipe by providing a chamfer for the sipe edge or edges.

Further, the width of the sipe may be increased near the bottom of the sipe so as to have a flask-shaped cross sectional shape.

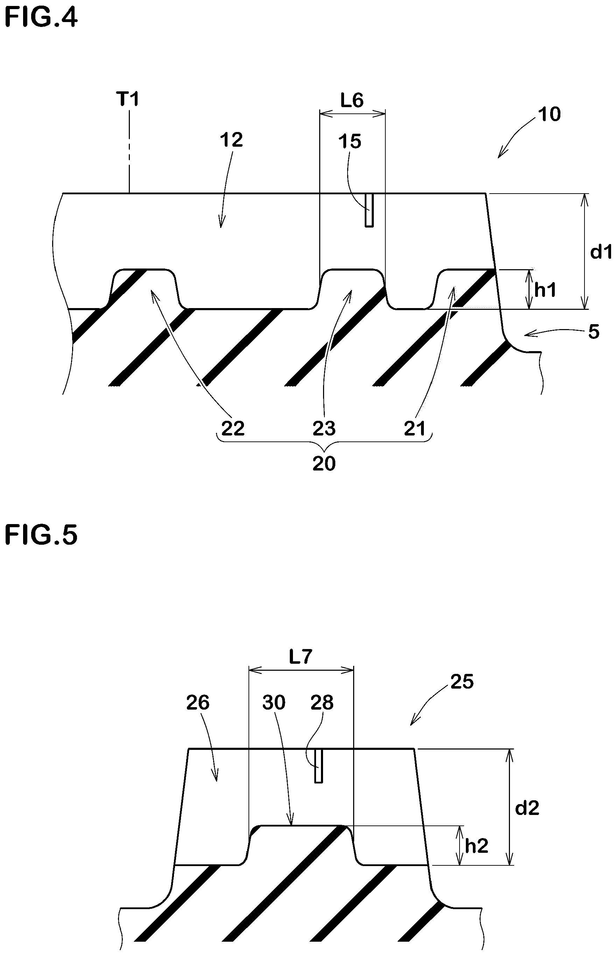

FIG. 4 shows a cross-sectional view taken along line A-A of FIG. 2.

The shoulder lateral grooves 12 include a tie-bar-equipped shoulder lateral groove 12 which is, as shown in FIG. 4, provided with at least one tie bar 20 raising from the groove bottom so as to connect between two of the shoulder blocks 10 adjacent to each other through the tie-bar-equipped shoulder lateral groove 12. In FIGS. 1 to 3, the tie bars 20 are omitted from the shoulder lateral grooves 12 for the sake of simplicity.

By adopting the above configuration, the tire 1 according to the present invention can exhibit excellent ride comfort performance while maintaining wear resistance of the blocks for the following reasons.

According to the present invention, since the shoulder sipes 15 extend from the shoulder lateral grooves 12 and end in the shoulder blocks 10, the rigidity in the tire axial direction of the shoulder blocks 10 can be relaxed, while maintaining the rigidity in the tire circumferential direction of the shoulder blocks 10. Therefore, it is possible to improve the ride comfort performance while maintaining the wear resistance.

on the other hand, by providing the tie bars 20 in the shoulder lateral grooves 12, the deformation of the shoulder land portions 7 is appropriately suppressed, and the wear resistance can be further maintained.

In the present invention, therefore, excellent ride comfort performance can be exhibited while maintaining the wear resistance of the blocks.

Hereinafter, the present embodiment will be described in more detail.

Each configuration described below shows a specific example for the present embodiment.

Therefore, even if the tire does not have the configuration described below, the tire will exert the above-mentioned effects of the present invention.

Further, even if any one of the configurations described below is independently applied to the tire having the above-mentioned configurations of the present invention, improvement in performance according to the applied configuration can be expected.

Further, when some of the configurations described below are applied in combination, to the tire having the above-mentioned configurations of the present invention, multiple effect according to the applied configurations on the improvement in performance can be expected.

As shown in FIG. 2, the widths w2 in the tire axial direction of the shoulder blocks 10 are, for example, set in a range from 15% to 25% of the tread width TW.

Further, the lengths L4 in the tire circumferential direction of the shoulder blocks 10 are smaller than the widths w2 of the shoulder blocks 10.

specifically, the lengths L4 in the tire circumferential direction of the shoulder blocks 10 are set in a range from 60% to 75% of the widths w2 in the tire axial direction of the shoulder blocks 10. As a result, the ground contacting top surface of each of the shoulder blocks 10 is longer in the tire axial direction than in the tire circumferential direction. Further, it is preferable that the ground contacting top surface has a rectangular shape.

The angles of the shoulder lateral grooves 12 with respect to the tire axial direction are not more than 30 degrees, preferably not more than 20 degrees, more preferably not more than 10 degrees. Most preferably, the shoulder lateral grooves 12 are arranged in parallel with the tire axial direction. Thereby, the wear of the shoulder blocks 10 is further suppressed.

Each of the shoulder lateral grooves 12 extends from the shoulder circumferential groove 5 to the first tread edge T1 while keeping a constant groove width in order to maintain the wear resistance.

Further, it is preferable that the groove widths w4 of the shoulder lateral grooves 12 are smaller than the groove widths w3 of the shoulder circumferential grooves 5.

specifically, the groove widths w4 of the shoulder lateral grooves 12 are set in a range from 85% to 95% of the groove widths w3 of the shoulder circumferential grooves 5.

In the present embodiment, as shown in FIG. 3, the above-said at least one shoulder sipe 15 includes a first shoulder sipe 16 and a second shoulder sipe 17.

Preferably, each of the shoulder blocks 10 is provided with one first shoulder sipe 16 and one second shoulder sipe 17.

In each of the shoulder blocks 10, the first shoulder sipe 16 is connected to one of the shoulder lateral grooves 12 which is positioned on one side of the shoulder block 10 in the tire circumferential direction (lower side in FIG. 3), and the second shoulder sipe 17 is connected to one of the shoulder lateral grooves 12 which is positioned on the other side of the shoulder block 10 in the tire circumferential direction (upper side in FIG. 3). Thereby, the ride comfort performance is further improved.

It is preferable that the first shoulder sipe 16 and the second shoulder sipe 17 are disposed axially inside the center line 10a of the shoulder block 10 in the tire axial direction (in FIG. 3, the center line is indicated by alternate long and short dash line).

More specifically, the edges of the first shoulder sipe 16 and the edges of the second shoulder sipe 17 are completely positioned axially inside the center line 10a.

Therefore, the rigidity of the shoulder block 10 is relaxed in its axially inside region, and as a result, the ride comfort performance is further improved.

on the other hand, if the first shoulder sipe 16 and the second shoulder sipe 17 are disposed excessively close to the shoulder circumferential groove 5, there is a possibility that uneven wear occurs on the shoulder block 10.

Therefore, the axial distance L3 from the connecting position 16a of the first shoulder sipe 16 with the shoulder lateral groove 12 to the axially inner end of the shoulder lateral groove 12 is preferably set in a range from 30% to 45% of the axial width w2 of the ground contacting top surface of the shoulder block 10.

And the axial distance L3 from the connecting position 17a of the second shoulder sipe 17 with the shoulder lateral groove 12 to the axially inner end of the shoulder lateral groove 12 is preferably set in a range from 30% to 45% of the axial width w2 of the ground contacting top surface of the shoulder block 10.

It is preferable that the connecting position 17a of the second shoulder sipe 17 with the shoulder lateral groove 12 is displaced in the tire axial direction from the connecting position 16a of the first shoulder sipe 16 with the shoulder lateral groove 12.

The distance L9 in the tire axial direction between the connecting position 16a and the connecting position 17a is preferably set in a range from 5% to 10% of the axial width w2 of the ground contacting top surface of the shoulder block 10. Thereby, it becomes possible to further improve the wear resistance of the shoulder blocks 10.

In order to further improve the wear resistance of the shoulder blocks 10, it is preferred that the first shoulder sipe 16 and the second shoulder sipe 17 are inclined in the same direction with respect to the tire circumferential direction.

In the present embodiment, the first shoulder sipe 16 and the second shoulder sipe 17 are inclined at the same angle with respect to the tire circumferential direction.

Preferably, the angle θ1 between the shoulder lateral groove 12 and the shoulder sipe 15 is set in a range from 50 to 80 degrees.

In each of the shoulder blocks 10, the first shoulder sipe 16 and the second shoulder sipe 17 are arranged such that the first shoulder sipe 16 and the second shoulder sipe 17 are positioned within a narrow zone 19.

The narrow zone 19 is shown in FIG. 2 by shading with small dots. As shown, the narrow zone 19 extends with a constant width and is inclined in the substantially same direction as the first shoulder sipe 16 and the second shoulder sipe 17 in the top view of the shoulder block 10. The constant width of the narrow zone 19 is preferably not more than 10 mm.

In this example, in order to further improve the ride comfort performance, the first shoulder sipe 16 and the second shoulder sipe 17 are arranged so as to extend substantially on a straight line. In this case, the width of the narrow zone 19 can be the substantially same as the width of the sipes 16 and 17.

It is preferable that each shoulder sipe 15 (16, 17) ends within the shoulder block 10 without crossing the center line 10b of the shoulder block 10 in the tire circumferential direction (indicated by the alternate long and short dash line in FIG. 2).

It is preferable that the length L5 in the tire circumferential direction of the shoulder sipe 15 is set in a range from 25% to 35% of the length L4 in the tire circumferential direction of the shoulder block 10.

such shoulder sipes 15 serve for improving the wear resistance and the ride comfort performance in a well-balanced manner.

In the present embodiment, the ground contacting top surface of each of the shoulder blocks 10 is not provided with a groove or a sipe except for the first shoulder sipe 16 and the second shoulder sipe 17. Thereby, the above described effects are surely exhibited.

The shoulder lateral grooves 12 include the tie-bar-equipped shoulder lateral groove 12 provided with at least one tie bar 20.

In the embodiment, each of the shoulder lateral grooves 12 is formed as the tie-bar-equipped shoulder lateral groove 12 provided a plurality of the tie bars 20 as shown in FIG. 4. Further, each shoulder sipe 15 (16, 17) is connected to the tie-bar-equipped shoulder lateral groove 12 at the same position in the groove length direction as one of the tie bars 20. This further improves the wear resistance.

The expression "at the same position as the tie bar 20" means that the shoulder sipe 15 is included in a zone, which extends radially outwardly from the radially outer surface of the tie bar 20 while keeping a constant width equal to that of the radially outer surface, in the cross section of the tie-bar-equipped shoulder lateral groove 12 taken along the length direction of the groove 12. The boundary between the radially outer surface and the other surface of the tie bar 20 is lies at the center position of the tie bar 20 in the radial height direction.

In this embodiment, as shown in FIG. 4, the tie bars 20 are an axially inner tie bar 21, an axially outer tie bar 22, and an intermediate tie bar 23 therebetween.

The axially inner tie bar 21 is disposed axially inside a center position in the tire axial direction of the tie-bar-equipped shoulder lateral groove 12, wherein the center position is that of the center between the axially inner end at the shoulder circumferential groove 5 and the axially outer end at the first tread edge.

Preferably, the axially inner tie bar 21 is disposed at the axially inner end of the tie-bar-equipped shoulder lateral groove 12. such inner tie bar 21 serves for suppressing uneven wear occurring near the axially inner end portion of the tie-bar-equipped shoulder lateral groove 12.

The axially outer tie bar 22 is disposed axially outside the above-mentioned center position of the tie-bar-equipped shoulder lateral groove 12.

Preferably, the outer tie bar 22 is disposed at the shoulder lateral groove's axially outer end at the first tread edge. specifically, in a cross section of the tie-bar-equipped shoulder lateral groove 12 taken along the length direction of the tie-bar-equipped shoulder lateral groove 12, when a zone which extends radially outwardly from the radially outer surface of the outer tie bar 22 while keeping a constant width equal to the width of the radially outer surface, is set, the first tread edge T1 is included in this zone.

In other words, the first tread edge T1 is included in the extent of the radially outer surface of the outer tie bar 22 in the length direction of the tie-bar-equipped shoulder lateral groove 12.

such outer tie bars 22 serve for suppressing uneven wear occurring near the first tread edge T1.

The intermediate tie bar 23 is disposed between both ends in the tire axial direction of the shoulder lateral groove 12, and between the axially outer tie bar 22 and the axially inner tie bar 21.

such intermediate tie bar 23 can effectively suppress the shoulder lateral groove 12 from opening excessively, and can further improve the wear resistance.

In the present embodiment, the shoulder sipe 15 is connected to the shoulder lateral groove 12 at the same position in the groove length direction as the intermediate tie bar 23.

The shoulder lateral groove 12 in the present embodiment is provided with only the axially inner tie bar 21, axially outer tie bar 22, and intermediate tie bar 23.

But, the present invention is not limited to such arrangement. For example, the shoulder lateral groove 12 may be provided with only one of these tie bars 20, or only two of these tie bars 20.

The axial length L6 of each tie bar 20 is preferably set in a range from 15% to 25% of the axial width w2 of the ground contacting top surface of the shoulder block 10.

The total length in the tire axial direction of all the tie bars 20 disposed in one shoulder lateral groove 12 is preferably set in a range from 40% to 60% of the axial width w2 of the ground contacting top surface of the shoulder block 10.

Here, the axial length of the tie bar 20 is measured at the center position in the radial height direction of the tie bar 20. As a result, the wear resistance and the ride comfort performance are improved in a well-balanced manner.

In the present embodiment, the axially inner tie bar 21, axially outer tie bar 22, and intermediate tie bar 23 have the same radial height h1.

Preferably, the radial height h1 is set in a range from 25% to 40% of the maximum depth d1 of the shoulder lateral groove 12.

Each of the two middle land portions 8 is provided with middle lateral grooves 26 as shown in FIG. 2.

The middle lateral grooves 26 extend across the entire axial width of the middle land portion 8. Thereby, the middle land portion 8 is circumferentially divided into middle blocks 25.

It is preferable that the axial width w5 of the ground contacting top surface of the middle block 25 is smaller than the axial width w2 of the ground contacting top surface of the shoulder block 10.

It is preferable that the axial width w5 is set in a range from 55% to 70% of the axial width w2.

Thereby, the progress of wear of the shoulder blocks 10 and the middle blocks 25 becomes uniform, and uneven wear of the shoulder blocks 10 and middle blocks 25 is suppressed.

The middle lateral grooves 26 in this example are inclined with respect to the tire axial direction.

The angle θ2 of the middle lateral groove 26 with respect to the tire axial direction is larger than the angle of the shoulder lateral groove 12 with respect to the tire axial direction.

For example, the angle θ2 is in a range from 10 to 45 degrees. In the present embodiment, the angle θ2 of the middle lateral groove 26 increases toward the inside in the tire axial direction. Thereby, the middle lateral groove 26 is curved convexly toward one side in the tire circumferential direction (lower side in FIG. 2).

such middle lateral groove 26 can improve the wet performance in addition to the wear resistance and the ride comfort performance.

In the present embodiment, the groove width w6 of the middle lateral groove 26 is larger than the groove width w4 of the shoulder lateral groove 12. For example, the groove width w6 of the middle lateral groove 26 is set in a range from 110% to 130% of the groove width w4 of the shoulder lateral groove 12. Thereby, the progress of wear of the shoulder land portion 7 and the middle land portion 8 becomes uniform, and uneven wear of the shoulder land portion 7 and the middle land portion 8 is suppressed.

FIG. 5 is a cross-sectional view taken along line B-B of FIG. 2.

The middle lateral grooves 26 include a tie-bar-equipped middle lateral groove 26 which is, as shown in FIG. 5, provided with at least one middle tie bar 30 raising from the groove bottom so as to connect between two of the middle blocks 25 adjacent to each other trough the tie-bar-equipped middle lateral groove 26.

In the present embodiment, each of the middle lateral grooves 26 is the tie-bar-equipped middle lateral groove 26 provided with only one middle tie bar 30.

The middle tie bar 30 serves for increasing the rigidity in the tire circumferential direction of the middle land portion 8 and improving the wear resistance.

In the present embodiment, the above-said only one middle tie bar 30 is disposed between both ends in the tire axial direction of the tie-bar-equipped middle lateral groove 26. However, the present invention is not limited to such arrangement. For example, a plurality of the middle tie bars 30 may be provided in one middle lateral groove 26.

For example, the axial length L7 of the middle tie bar 30 is set in a range from 40% to 55% of the axial width w5 of the middle block 25.

The radial height h2 of the middle tie bar 30 is set in a range from 25% to 40% of the maximum depth d2 of the middle lateral groove 26.

In the present embodiment, the middle tie bar 30 is disposed so as to extend across the center position in the tire axial direction of the tie-bar-equipped middle lateral groove 26. Thereby, the wear resistance and the ride comfort performance are improved in a well-balanced manner.

It is preferable that, when the axial lengths of the tie bars are compared, the middle tie bar 30 is larger than any of the axially inner tie bar 21, outer tie bar 22 and intermediate tie bar 23 provided in the shoulder lateral groove 12.

On the other hand, it is preferable that the axial length L7 of the middle tie bar 30 is smaller than the total axial length of the axially inner tie bar 21, outer tie bar 22 and intermediate tie bar 23. Thereby, the rigidity distribution of the shoulder land portion 7 and the middle land portion 8 is optimized, and the wear resistance is further improved.

Each of the middle blocks 25 is provided with at least one middle sipe 28 as shown in FIG. 2.

The middle sipe 28 is connected to at least one of the two middle lateral grooves 26 located on both sides in the tire circumferential direction of the middle block 25.

In the present embodiment, the middle sipe 28 is connected to the two middle lateral grooves 26 located on both sides in the tire circumferential direction. That is, the middle sipe 28 completely crosses the middle block 25 in the tire circumferential direction.

Further, it is preferable that each of the both ends in the tire circumferential direction of the middle sipe 28 is connected to a central part of the middle lateral groove 26 when divided into three equal parts in the length direction.

such middle sipe 28 serves for relaxing the rigidity in the tire axial direction of the middle block 25 and improving the ride comfort performance.

The middle sipe 28 in this example is inclined with respect to the tire circumferential direction.

It is preferable that the middle sipe 28 is inclined in the same direction as the shoulder sipes 15.

The angle θ3 between the middle sipe 28 and the middle lateral grooves 26 is, for example, set in a range from 75 to 90 degrees. such middle sipe 28 serves for improving the wear resistance and the ride comfort performance in a well-balanced manner.

It is preferable that the middle sipe 28 is connected to the middle lateral groove 26 at the same position as the middle tie bar 30 as shown in FIG. 5.

Thereby, the connecting position between the middle lateral groove 26 and the middle sipe 28 is reinforced by the middle tie bar 30, and uneven wear near the connecting position is suppressed.

In the present embodiment, as shown in FIG. 2, each of the middle blocks 25 is not provided with a groove or a sipe except for the middle sipe 28. Thereby, the above-mentioned effect can be further enhanced.

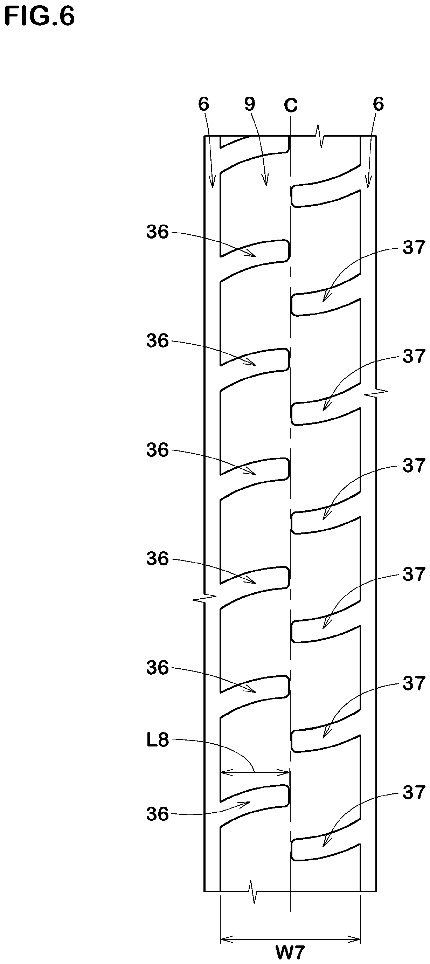

FIG. 6 is a partial top view of the crown land portion 9. As shown in FIG. 6, the axial width w7 of the crown land portion 9 is, for example, set in a range from 10% to 20% of the tread width Tw.

It is preferable that the axial width w7 of the crown land portion 9 is smaller than the axial width w2 of the shoulder blocks 10.

The crown land portion 9 is provided with first crown lateral grooves 36 and second crown lateral grooves 37.

The first crown lateral grooves 36 extend from the crown circumferential groove 6 on one side in the tire axial direction (left side in FIG. 6) of the crown land portion 9 toward the tire equator C, and ends within the crown land portion 9.

The second crown lateral grooves 37 extend from the crown circumferential groove 6 on the other side in the tire axial direction (right side in FIG. 6) of the crown land portion 9 toward the tire equator C, and ends within the crown land portion 9.

The first crown lateral grooves 36 and the second crown lateral grooves 37 can enhance the wet performance, while maintaining the rigidity of the crown land portion 9.

In order to improve the wear resistance and the ride comfort in a well-balanced manner, the axial length L8 of the first crown lateral groove 36 and the axial length L8 of the second crown lateral groove 37 are preferably set in a range from 45% to 55% of the axial width w7 of the crown land portion 9.

The first crown lateral grooves 36 are curved convexly toward one side in the tire circumferential direction (upper side in FIG. 6). The second crown lateral grooves 37 are curved convexly toward the other side in the tire circumferential direction (lower side in FIG. 6). Thereby, uneven wear of the crown land portion 9 is further suppressed.

The middle lateral grooves 26 adjacent to the first crown lateral grooves 36 are curved convexly toward the above-said other side in the tire circumferential direction (lower side in FIG. 1).

The middle lateral grooves 26 adjacent to the second crown lateral grooves 37 are curved convexly toward the above-said one side in the tire circumferential direction (upper side in FIG. 1).

By arranging the lateral grooves in such way, the progress of wear in each land portion becomes uniform, and uneven wear in each land portion is suppressed.

while detailed description has been made of a preferable embodiment of the present invention, the present invention can be embodied in various forms without being limited to the illustrated embodiment.

### Comparison tests

Based on the tread pattern shown in FIG. 1, pneumatic tires were experimentally manufactured as working examples Ex.1-Ex.9 according to the present invention.

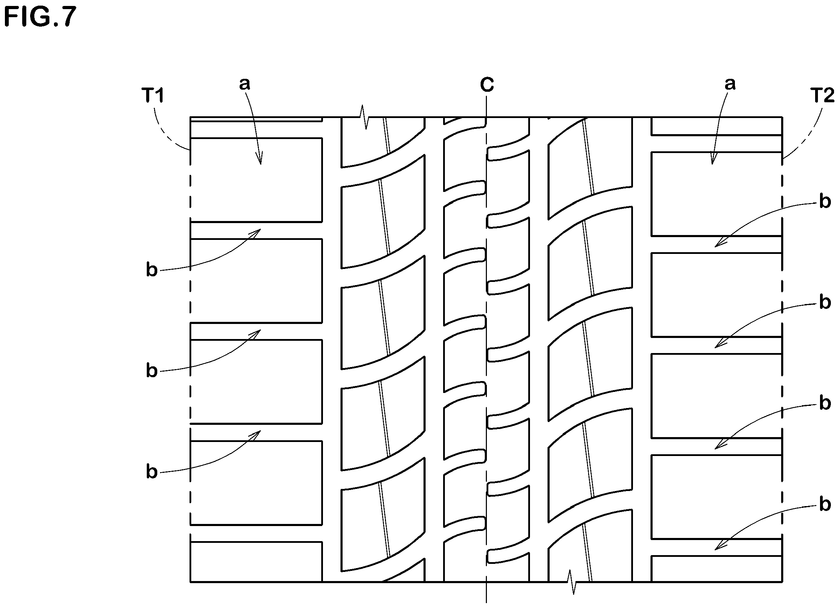

Further, based on the tread pattern shown in FIG. 7, a pneumatic tire was experimentally manufactured as a comparative example Ref. In the comparative example, as shown in FIG. 7, the shoulder land portions (a) were provided with no sipes, and the shoulder lateral grooves (b) were provided with no tie bars. Otherwise, the comparative example was substantially the same as the working examples.

Specifications of these test tires are shown in Table 1.

The tire sizes were 235/60R17C (rim size 17x6.0J)

Using a test car (3000cc 4WD car) with the same test tires mounted on all wheels and inflated to 525 kPa, the test tires were tested for wear resistance and ride comfort.

### < wear resistance test >

After running for 30,000 km on general roads and highways with the above test vehicle, the average of the remaining heights of the shoulder blocks (the average of the remaining groove depths of the shoulder lateral grooves) was obtained.

The results are indicated in Table 1 by an index based on the comparative example being 100, wherein the larger the value, the better the wear resistance of the shoulder blocks.

### < Ride comfort test >

when running on general roads and highways with the above test vehicle, the ride comfort was evaluated by the driver. The results are indicated in Table 1 by an index based on the comparative example being 100, wherein the larger the value, the better the ride comfort.

**Table 1**

| tire | Ref. | Ex.1 | Ex.2 | Ex.3 | Ex. 4 |
|---|---|---|---|---|---|
| tread pattern | Fig.7 | Fig.1 | Fig.1 | Fig.1 | Fig.1 |
| (P)resence or (A)bsence of shoulder sipe | A | P | P | P | P |
| (P)resence or (A)bsence of tie bar in shoulder lateral groove | A | P | P | P | P |
| angle θ1 between shoulder sipe and shoulder lateral groove (deg.) | -- | 70 | 50 | 60 | 75 |
| shoulder sipe length L5/shoulder block length L4 (%) | -- | 30 | 30 | 30 | 30 |
| wear resistance | 100 | 104 | 102 | 103 | 104 |
| ride comfort | 100 | 110 | 110 | 110 | 109 |
| | | | | | |

| tire | Ex.5 | Ex. 6 | Ex.7 | Ex.8 | Ex.9 |
|---|---|---|---|---|---|
| tread pattern | Fig.1 | Fig.1 | Fig.1 | Fig.1 | Fig.1 |
| (P)resence or (A)bsence of shoulder sipe | P | P | P | P | P |
| (P)resence or (A)bsence of tie bar in shoulder lateral groove | P | P | P | P | P |
| angle θ1 between shoulder sipe and shoulder lateral groove (deg.) | 80 | 70 | 70 | 70 | 70 |
| shoulder sipe length L5/shoulder block length L4 (%) | 30 | 20 | 25 | 35 | 40 |
| wear resistance | 105 | 105 | 104 | 102 | 101 |
| ride comfort | 108 | 105 | 108 | 111 | 112 |

From the test results, it was confirmed that the tires according to the present invention exhibited excellent ride comfort performance while maintaining the wear resistance of the blocks.

### Description of the Reference signs

- 2: tread portion
- 5: shoulder circumferential groove
- 7: shoulder land portion
- 10: shoulder block
- 12: shoulder lateral groove
- 15: shoulder sipe
- 20: tie bar
- T1: first tread edge

## Claims

1. A tire (1) comprising:
a tread portion (2) having a first tread edge (T1), and provided with a shoulder circumferential groove (5) disposed adjacently to the first tread edge (T1) and extending continuously in the tire circumferential direction, so as to define a shoulder land portion (7) between the shoulder circumferential groove (5) and the first tread edge (T1), wherein
the shoulder land portion (7) is provided with shoulder lateral grooves (12) extending from the shoulder circumferential groove (5) to the first tread edge (T1), so as to circumferentially divide the shoulder land portion (7) into shoulder blocks (10),
each of the shoulder blocks (10) is provided with a shoulder sipe (15) which extends from one of the shoulder lateral grooves (12) and ends within the shoulder block (10), and
the shoulder lateral grooves (12) include a tie-bar-equipped shoulder lateral groove (12) which is provided with at least one tie bar (20) raising from the groove bottom so as to connect between two of the shoulder blocks (10) adjacent to the tie-bar-equipped shoulder lateral groove (12),
**characterized in that**
said at least one tie bar (20) includes an axially outer tie bar (22) positioned axially outside the center position in the tire axial direction of the tie-bar-equipped shoulder lateral groove (12).

2. The tire according to claim 1, wherein
said at least one tie bar (20) includes an axially inner tie bar (21) positioned axially inside a center position in the tire axial direction of the tie-bar-equipped shoulder lateral groove (12).

3. The tire according to claim 1 or 2, wherein
said at least one tie bar (20) includes an intermediate tie bar (23) positioned between both ends in the tire axial direction of the tie-bar-equipped shoulder lateral groove (12).

4. The tire according to claim 1, 2, or 3, wherein
said at least one tie bar (20) of the tie-bar-equipped shoulder lateral groove (12) is a plurality of the tie bars, and
the shoulder sipe (15) which extends from the tie-bar-equipped shoulder lateral groove (12) is connected to the tie-bar-equipped shoulder lateral groove (12) at the same position as one of the tie bars (20).

5. The tire according to any one of claims 1 to 4, wherein
said at least one tie bar of the tie-bar-equipped shoulder lateral groove (12) includes an intermediate tie bar (23) positioned between both ends in the tire axial direction of the tie-bar-equipped shoulder lateral groove (12), and
the shoulder sipe (15) which extends from the tie-bar-equipped shoulder lateral groove (12) is connected to the tie-bar-equipped shoulder lateral groove (12) at the same position as the intermediate tie bar (23).

6. The tire according to any one of claims 1 to 5, wherein
said shoulder sipe (15) of each shoulder block (10) includes
a first shoulder sipe (16) connected to one of the shoulder lateral grooves (12) which is located on one side in the tire circumferential direction of the shoulder block (10), and
a second shoulder sipe (17) connected to one of the shoulder lateral grooves (12) which is located on the other side in the tire circumferential direction of the shoulder block (10).

7. The tire according to claim 6, wherein
the first shoulder sipe (16) and the second shoulder sipe (17) are inclined in the same direction with respect to the tire circumferential direction.

8. The tire according to claim 6 or 7, wherein
the connecting position (17a) between the second shoulder sipe (17) and said one of the shoulder lateral grooves (12)
is displaced in the tire axial direction from
the connecting position (16a) between the first shoulder sipe (16) and said one of the shoulder lateral grooves (12).

9. The tire according to any one of claims 1 to 8, wherein
in each of the shoulder blocks (10) provided with the shoulder sipe (15), the length (L5) in the tire circumferential direction of the shoulder sipe (15) is 25% to 35% of the length (L4) in the tire circumferential direction of the shoulder block (10).

10. The tire according to any one of claims 1 to 9, wherein
the angle (θ1) between the shoulder sipe (15) and the shoulder lateral groove (12) from which the shoulder sipe (15) extends, is in a range from 50 to 80 degrees.

11. The tire according to any one of claims 1 to 10, wherein
the tread portion (2) comprises a middle land portion (8) adjacent to the shoulder land portion (7) via the shoulder circumferential groove (5),
the middle land portion (8) is provided with a plurality of middle lateral grooves (26) extending across the entire axial width of the middle land portion (8) so as to circumferentially divide the middle land portion into middle blocks (25), and
the middle lateral grooves (26) include a tie-bar-equipped middle lateral groove (26) provided with at least one middle tie bar (30) raising from the groove bottom so as to connect between two of the middle blocks (25) adjacent to the tie-bar-equipped middle lateral groove (26).

12. The tire according to claim 11, wherein
each of the middle blocks (25) is provided with a middle sipe (28) connected to one of the middle lateral grooves (26), and
when the middle lateral groove (26) to which the middle sipe (28) is connected is the tie-bar-equipped middle lateral groove (26),
the middle sipe (28) is connected at the same position as the only one middle tie bar (30) or one of the middle tie bars (30).

13. The tire according to claim 12, wherein
said at least one middle sipe (28) completely crosses the middle block (25) in the tire circumferential direction.

## Patentansprüche

1. Reifen (1), umfassend:
einen Laufflächenabschnitt (2), der eine erste Laufflächenkante (T1) aufweist und mit einer Schulterumfangsrille (5) versehen ist, die benachbart zu der ersten Laufflächenkante (T1) angeordnet ist und sich kontinuierlich in der Reifenumfangsrichtung erstreckt, um einen Schulterlandabschnitt (7) zwischen der Schulterumfangsrille (5) und der ersten Laufflächenkante (T1) zu definieren,
wobei
der Schulterlandabschnitt (7) mit Schulterquerrillen (12) versehen ist, die sich von der Schulterumfangsrille (5) zu der ersten Laufflächenkante (T1) erstrecken, um den Schulterlandabschnitt (7) in Umfangsrichtung in Schulterblöcke (10) zu unterteilen,
jeder der Schulterblöcke (10) mit einem Schulterfeinschnitt (15) versehen ist, der sich von einer der Schulterquerrillen (12) erstreckt und innerhalb des Schulterblocks (10) endet, und
die Schulterquerrillen (12) eine mit einem Anbindungssteg versehene Schulterquerrille (12) umfassen, die mit mindestens einem Anbindungssteg (20) versehen ist, der sich von dem Rillenboden erhebt, um zwischen zwei der Schulterblöcke (10) benachbart zu der mit einem Anbindungssteg versehenen Schulterquerrille (12) eine Verbindung herzustellen, **dadurch gekennzeichnet, dass**
der mindestens eine Anbindungssteg (20) einen axial äußeren Anbindungssteg (22) umfasst, der axial außen von der Mittelposition in der Reifenaxialrichtung der mit einem Anbindungssteg versehenen Schulterquerrille (12) positioniert ist.

2. Reifen nach Anspruch 1, wobei
der mindestens eine Anbindungssteg (20) einen axial inneren Anbindungssteg (21) umfasst, der axial innen von einer Mittelposition in der Reifenaxialrichtung der mit einem Anbindungssteg versehenen Schulterquerrille (12) positioniert ist.

3. Reifen nach Anspruch 1 oder 2, wobei
der mindestens eine Anbindungssteg (20) einen Zwischenanbindungssteg (23) umfasst, der zwischen beiden Enden in der Reifenaxialrichtung der mit einem Anbindungssteg versehenen Schulterquerrille (12) positioniert ist.

4. Reifen nach Anspruch 1, 2 oder 3, wobei
der mindestens eine Anbindungssteg (20) der mit einem Anbindungssteg versehenen Schulterquerrille (12) eine Vielzahl der Anbindungsstege ist, und
der Schulterfeinschnitt (15), der sich von der mit einem Anbindungssteg versehenen Schulterquerrille (12) erstreckt, mit der mit einem Anbindungssteg versehenen Schulterquerrille (12) an derselben Position wie einer der Anbindungsstege (20) verbunden ist.

5. Reifen nach einem der Ansprüche 1 bis 4, wobei
der mindestens eine Anbindungssteg der mit einem Anbindungssteg versehenen Schulterquerrille (12) einen Zwischenanbindungssteg (23) umfasst, der zwischen beiden Enden in der Reifenaxialrichtung der mit einem Anbindungssteg versehenen Schulterquerrille (12) positioniert ist, und
der Schulterfeinschnitt (15), der sich von der mit einem Anbindungssteg versehenen Schulterquerrille (12) erstreckt, mit der mit einem Anbindungssteg versehenen Schulterquerrille (12) an derselben Position wie der Zwischenanbindungssteg (23) verbunden ist.

6. Reifen nach einem der Ansprüche 1 bis 5, wobei
der Schulterfeinschnitt (15) jedes Schulterblocks (10) umfasst einen ersten Schulterfeinschnitt (16), der mit einer der Schulterquerrillen (12) verbunden ist, die sich auf einer Seite in der Reifenumfangsrichtung des Schulterblocks (10) befindet, und
einen zweiten Schulterfeinschnitt (17), der mit einer der Schulterquerrillen (12) verbunden ist, die sich auf der anderen Seite in der Reifenumfangsrichtung des Schulterblocks (10) befindet.

7. Reifen nach Anspruch 6, wobei
der erste Schulterfeinschnitt (16) und der zweite Schulterfeinschnitt (17) in der gleichen Richtung in Bezug auf die Reifenumfangsrichtung geneigt sind.

8. Reifen nach Anspruch 6 oder 7, wobei
die Verbindungsposition (17a) zwischen dem zweiten Schulterfeinschnitt (17) und der einen der Schulterquerrillen (12) in der Reifenaxialrichtung von der Verbindungsposition (16a) zwischen dem ersten Schulterfeinschnitt (16) und der einen der Schulterquerrillen (12) verschoben ist.

9. Reifen nach einem der Ansprüche 1 bis 8, wobei
in jedem der Schulterblöcke (10), die mit dem Schulterfeinschnitt (15) versehen sind, die Länge (L5) in der Reifenumfangsrichtung des Schulterfeinschnitts (15) 25 % bis 35 % der Länge (L4) in der Reifenumfangsrichtung des Schulterblocks (10) beträgt.

10. Reifen nach einem der Ansprüche 1 bis 9, wobei
der Winkel (θ1) zwischen dem Schulterfeinschnitt (15) und der Schulterquerrille (12), von der sich der Schulterfeinschnitt (15) erstreckt, in einem Bereich von 50 bis 80 Grad liegt.

11. Reifen nach einem der Ansprüche 1 bis 10, wobei
der Laufflächenabschnitt (2) einen mittleren Landabschnitt (8) umfasst, der über die Schulterumfangsrille (5) zu dem Schulterlandabschnitt (7) benachbart ist,
der mittlere Landabschnitt (8) versehen ist mit einer Vielzahl von mittleren Querrillen (26), die sich über die gesamte axiale Breite des mittleren Landabschnitts (8) erstrecken, um den mittleren Landabschnitt in Umfangsrichtung in mittlere Blöcke (25) zu unterteilen, und
die mittleren Querrillen (26) eine mit einem Anbindungssteg versehene mittlere Querrille (26) umfassen, die mit mindestens einem mittleren Anbindungssteg (30) versehen ist, der sich von dem Rillenboden erhebt, um zwischen zwei der mittleren Blöcke (25) benachbart zu der mit einem Anbindungssteg versehenen mittleren Querrille (26) eine Verbindung herzustellen.

12. Reifen nach Anspruch 11, wobei
jeder der mittleren Blöcke (25) mit einem mittleren Feinschnitt (28) versehen ist, der mit einer der mittleren Querrillen (26) verbunden ist, und
wenn die mittlere Querrille (26), mit der der mittlere Feinschnitt (28) verbunden ist, die mit einem Anbindungssteg versehene mittlere Querrille (26) ist,
der mittlere Feinschnitt (28) an derselben Position wie der nur eine mittlere Anbindungssteg (30) oder einer der mittleren Anbindungsstege (30) verbunden ist.

13. Reifen nach Anspruch 12, wobei
der mindestens eine mittlere Feinschnitt (28) den mittleren Block (25) in der Reifenumfangsrichtung vollständig kreuzt.

## Revendications

1. Pneumatique (1) comprenant :
une portion formant bande de roulement (2) ayant un premier bord de bande de roulement (T1), et dotée d'une rainure circonférentielle d'épaulement (5) disposée de manière adjacente au premier bord de bande de roulement (T1) et s'étendant en continu dans la direction circonférentielle du pneumatique de manière à définir une portion en relief d'épaulement (7) entre la rainure circonférentielle d'épaulement (5) et le premier bord de bande de roulement (T1), dans lequel
la portion en relief d'épaulement (7) est dotée de rainures latérales d'épaulement (12) s'étendant depuis la rainure circonférentielle d'épaulement (5) jusqu'au premier bord de bande de roulement (T1), de manière à diviser circonférentiellement la portion en relief d'épaulement (7) en blocs d'épaulement (10),
chacun des blocs d'épaulement (10) est doté d'une fente d'épaulement (15) qui s'étend depuis l'une des rainures latérales d'épaulement (12) et qui se termine à l'intérieur du bloc d'épaulement (10), et
les rainures latérales d'épaulement (12) incluent une rainure latérale d'épaulement équipée de barrettes de liaison (12) qui est dotée d'au moins une barrette de liaison (20) s'élevant depuis le fond de rainure de manière à assurer une connexion entre deux des blocs d'épaulement (10) adjacents à la rainure latérale d'épaulement équipée de barrettes de liaison (12),
**caractérisé en ce que**
ladite au moins une barrette de liaison (20) inclut une barrette de liaison axialement extérieure (22) positionnée axialement à l'extérieur de la position centrale dans la direction axiale du pneumatique de la rainure latérale d'épaulement équipée de barrettes de liaison (12).

2. Pneumatique selon la revendication 1, dans lequel
ladite au moins une barrette de liaison (20) inclut une barrette de liaison axialement intérieure (21) positionnée axialement à l'intérieur d'une position centrale dans la direction axiale du pneumatique de la rainure latérale d'épaulement équipée de barrettes de liaison (12).

3. Pneumatique selon la revendication 1 ou 2, dans lequel
ladite au moins une barrette de liaison (20) inclut une barrette de liaison intermédiaire (23) positionnée entre les deux extrémités dans la direction axiale du pneumatique de la rainure latérale d'épaulement équipée de barrettes de liaison (12).

4. Pneumatique selon la revendication 1, 2, ou 3, dans lequel
ladite au moins une barrette de liaison (20) de la rainure latérale d'épaulement équipée de barrettes de liaison (12) est une pluralité de barrettes de liaison, et
la fente d'épaulement (15) qui s'étend depuis la rainure latérale d'épaulement équipée de barrettes de liaison (12) est connectée à la rainure latérale d'épaulement équipée de barrettes de liaison (12) à la même position que l'une des barrettes de liaison (20).

5. Pneumatique selon l'une quelconque des revendications 1 à 4, dans lequel
ladite au moins une barrette de liaison de la rainure latérale d'épaulement équipée de barrettes de liaison (12) inclut une barrette de liaison intermédiaire (23) positionnée entre les deux extrémités dans la direction axiale du pneumatique de la rainure latérale d'épaulement équipée de barrettes de liaison (12), et
la fente d'épaulement (15) qui s'étend depuis la rainure latérale d'épaulement équipée de barrettes de liaison (12) est connectée à la rainure latérale d'épaulement équipée de barrettes de liaison (12) à la même position que la barrette de liaison intermédiaire (23).

6. Pneumatique selon l'une quelconque des revendications 1 à 5, dans lequel ladite fente d'épaulement (15) de chaque bloc d'épaulement (10) inclut
une première fente d'épaulement (16) connectée à l'une des rainures latérales d'épaulement (12) qui est située sur un côté dans la direction circonférentielle du pneumatique du bloc d'épaulement (10), et
une seconde fente d'épaulement (17) connectée à l'une des fentes latérales d'épaulement (12) qui est située sur l'autre côté dans la direction circonférentielle du pneumatique du bloc d'épaulement (10).

7. Pneumatique selon la revendication 6, dans lequel
la première fente d'épaulement (16) et la seconde fente d'épaulement (17) sont inclinées dans la même direction par rapport à la direction circonférentielle du pneumatique.

8. Pneumatique selon la revendication 6 ou 7, dans lequel
la position de connexion (17a) entre la seconde fente d'épaulement (17) et ladite une des rainures latérales d'épaulement (12) est déplacée dans la direction axiale du pneumatique par rapport à la position de connexion (16a) entre la première fente d'épaulement (16) et ladite une des rainures latérales d'épaulement (12).

9. Pneumatique selon l'une quelconque des revendications 1 à 8, dans lequel dans chacun des blocs d'épaulement (10) dotés de la fente d'épaulement (15), la longueur (L5) dans la direction circonférentielle du pneumatique de la fente d'épaulement (15) est de 25 % à 35 % de la longueur (L4) dans la direction circonférentielle du pneumatique du bloc d'épaulement (10).

10. Pneumatique selon l'une quelconque des revendications 1 à 9, dans lequel
l'angle (θ1) entre la fente d'épaulement (15) et la rainure latérale d'épaulement (12) à partir de laquelle la fente d'épaulement (15) s'étend est dans une plage allant de 50 à 80 degrés.

11. Pneumatique selon l'une quelconque des revendications 1 à 10, dans lequel
la portion formant bande de roulement (2) comprend une portion en relief médiane (8) adjacente à la portion en relief d'épaulement (7) via la rainure circonférentielle d'épaulement (5),
la portion en relief médiane (8) est dotée d'une pluralité de rainures latérales médianes (26) s'étendant à travers la largeur axiale entière de la portion en relief médiane (8) de manière à diviser circonférentiellement la portion en relief médiane en blocs médians (25), et
les rainures latérales médianes (26) incluent une rainure latérale médiale équipée de barrettes de liaison (26) dotée d'au moins une barrette de liaison médiane (30) s'élevant depuis le fond de rainure de manière à assurer une connexion entre deux des blocs médians (25) adjacents à la rainure latérale médiane équipée de barrettes de liaison (26).

12. Pneumatique selon la revendication 11, dans lequel
chacun des blocs médians (25) est doté d'une fente médiane (28) connectée à l'une des rainures latérales médianes (26), et
quand la rainure latérale médiane (26) à laquelle la fente médiane (28) est connectée est la rainure latérale médiane équipée de barrettes de liaison (26),
la fente médiane (28) est connectée à la même position que ladite une seule barrette de liaison médiane (30) ou que l'une des barrettes de liaison médianes (30).

13. Pneumatique selon la revendication 12, dans lequel
ladite au moins une fente médiane (28) traverse complètement le bloc médian (25) dans la direction circonférentielle du pneumatique.
